# EUROPEAN PATENT SPECIFICATION

(11) **EP 2 771 658 B1**
(45) Date of publication and mention of the grant of the patent: **27.04.2016**
(21) Application number: 11874859.9
(22) Date of filing: 26.10.2011
(51) Int. Cl.: G01N 21/552, G01J 3/44, B82Y 20/00, B82Y 30/00, G01N 21/65

(54) **APPARATUS FOR USE IN A SENSING APPLICATION HAVING A DESTRUCTIBLE COVER**
VORRICHTUNG ZUR VERWENDUNG IN EINER ERFASSUNGSANWENDUNG MIT EINER ZERSTÖRBAREN ABDECKUNG
APPAREIL POUR UTILISATION DANS UNE APPLICATION DE DÉTECTION AYANT UNE COUVERTURE DESTRUCTIBLE

(43) Date of publication of application: 03.09.2014
(73) Proprietor: Hewlett-Packard Development Company, L.P., Houston, TX 77070 (US)
(72) Inventor: LI, Zhiyong, Palo Alto, California 94304-1100 (US); VONDRAN, Gary L. Jr., Palo Alto, California 94304-1112 (US)
(74) Representative: Hufton, David Alan
(86) International application number: PCT/US2011/057884
(87) International publication number: WO 2013/062540

(56) References cited:
- WO-A1-2011/027291
- WO-A1-2011/027291
- WO-A2-2010/033267
- US-A1- 2005 028 595
- US-A1- 2007 086 001
- US-A1- 2007 254 377
- US-A1- 2009 151 429
- US-A1- 2010 321 684
- US-A1- 2011 001 976
- US-B1- 6 643 919
- ANSOON KIM ET AL: "Study of Molecular Trapping Inside Gold Nanofinger Arrays on Surface-Enhanced Raman Substrates", JOURNAL OF THE AMERICAN CHEMICAL SOCIETY, vol. 133, no. 21, 1 June 2011 (2011-06-01) , pages 8234-8239, XP055135600, ISSN: 0002-7863, DOI: 10.1021/ja200247x
- MIN HU ET AL: "Gold Nanofingers for Molecule Trapping and Detection", JOURNAL OF THE AMERICAN CHEMICAL SOCIETY, vol. 132, no. 37, 22 September 2010 (2010-09-22), pages 12820-12822, XP055066395, ISSN: 0002-7863, DOI: 10.1021/ja105248h

## Description

### BACKGROUND

Raman scattering optical spectroscopy employs an emission spectrum or spectral components thereof produced by inelastic scattering of photons by an internal structure of the material being illuminated. These spectral components contained in a response signal (for instance, a Raman signal) are to facilitate determination of the material characteristics of an analyte species including identification of the analyte.

The Raman signal level or strength is often significantly enhanced by using a Raman-active material (for instance, Raman-active surface), however. For instance, the Raman scattered light generated by a compound (or ion) adsorbed on or within a few nanometers of a structured metal surface can be 10³-10¹² times greater than the Raman scattered light generated by the same compound in solution or in the gas phase. This process of analyzing a compound is called surface-enhanced Raman spectroscopy ("SERS"). In recent years, SERS has emerged as a routine and powerful tool for investigating molecular structures and characterizing interfacial and thin-film systems, and even enables single-molecule detection. Engineers, physicists, and chemists continue to seek improvements in systems and methods for performing SERS.

US2011/001976 discloses a method and apparatus for biogenic substance concentration measurement. The apparatus includes a cell with first region and second regions a test solution retention space and a first set of metallic nanorods - immobilized on the first region - each having a first antibody on their surface and a second set of metallic nanorods - immobilized on the second region - each having a second antibody on their surface. The retention space is filled with the biogenic material to be tested through a supply inlet.

US2010/321684 discloses a signal-amplification device in the form of: an arrangement of a plurality of MNSANW (multi-tiered non-SERS active nanowire) structures including metallic SERS-active nanoparticles, and an enclosure containing the signal-amplification device and the molecular constituent for use in Raman spectroscopic analysis.

US2007/254377 discloses a packaged NERS active structure including a substrate, at least one NERS-active structure disposed on the substrate, a packaging substrate having at least one opening there through disposed on the substrate, the opening being aligned with the NERS-active structure, and a removable membrane covering the opening.

### BRIEF DESCRIPTION OF THE DRAWINGS

Features of the present disclosure are illustrated by way of example and not limited in the following figure(s), in which like numerals indicate like elements, in which:
FIGS. 1A and 1B, respectively, show side views of an apparatus for use in a sensing application, according to two examples of the present disclosure;
FIG. 1C shows a top view of an array of the apparatuses depicted in FIG. 1A, according to an example of the present disclosure;
FIG. 2A shows an isometric view of an array of nano-fingers for use in a sensing application, according to an example of the present disclosure; and
FIGS. 2B and 2C show cross-sectional views along a line A-A, of the array shown in FIG. 2A, according to examples of the present disclosure;
FIG. 3 shows a block diagram of a sensing apparatus for use in a sensing application, according to an example of the present disclosure;
FIG. 4 shows a flow diagram of a method for fabricating the apparatus depicted in one of FIGS. 1A and 1B, according to an example of the present disclosure; and
FIG. 5 shows a flow diagram of a method for performing a sensing application using the apparatus depicted in one of FIGS. 1A and 1B, according to an example of the present disclosure.

### DETAILED DESCRIPTION

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on. In addition, the term "light" refers to electromagnetic radiation with wavelengths in the visible and non-visible portions of the electromagnetic spectrum, including infrared and ultra-violet portions of the electromagnetic spectrum.

Disclosed herein is an apparatus for use in a sensing application, such as, SERS, enhanced luminescence, enhanced fluorescence, etc. Also disclosed herein are a method for fabricating the apparatus and a method for performing a sensing application using the apparatus. The apparatus includes a body having a cavity containing an opening, a plurality of nano-fingers positioned in the cavity, and a destructible cover covering the opening in the cavity. The destructible cover is to protect the nano-fingers, for instance, following their fabrication. In one regard, the destructible cover is to be destroyed to enable access to the plurality of nano-fingers. In one example, the destructible cover is to dissolve when introduced into a particular medium, such as, a medium containing a substance to be tested. In this regard, the nano-fingers are protected following their fabrication until such time as the substance to be tested is to be introduced onto the nano-fingers.

According to an example, the destructible cover is attached over the cavity containing the nano-fingers while the apparatus is in a relatively clean environment. In other words, the destructible cover closes the cavity before contaminants are likely to be introduced onto the nano-fingers and more particularly, onto the Raman-active material nano-particles attached to the nano-fingers. The destructible cover also substantially protects the nano-fingers from physical harm that may occur, for instance, during shipping of the apparatus or other handling of the apparatus. Moreover, according to various examples, the gap in the cavity between the nano-fingers and the destructible cover is filled with a filling material that prevents the Raman-active material nano-particles from substantially any undesirable physical or chemical changes. In any regard, the destructible cover is to protect the Raman-active material nano-particles from contamination from air or other possible mechanisms that decrease the performance of the Raman-active material nano-particles for sensing applications. This extends the shelf-life of the apparatus as well as enhances its reliability.

The use of multiple nano-fingers having Raman-active material nano-particles attached to the tips of the multiple nano-fingers as disclosed herein generally enhances the electromagnetic field generation and therefore the Raman scattering of light from a substance to be tested. In other words, the closely positioned nano-particles on the nano-fingers enables hot-spots to have a larger electric field strength as compared with Raman-active material nano-particles that have simply been placed on the component layer because, for instance, the use of the nano-fingers enables the formation of a well controlled arrangement of nano-particles with relatively small (less than about 10 nm wide) gaps between adjacent nano-particles.

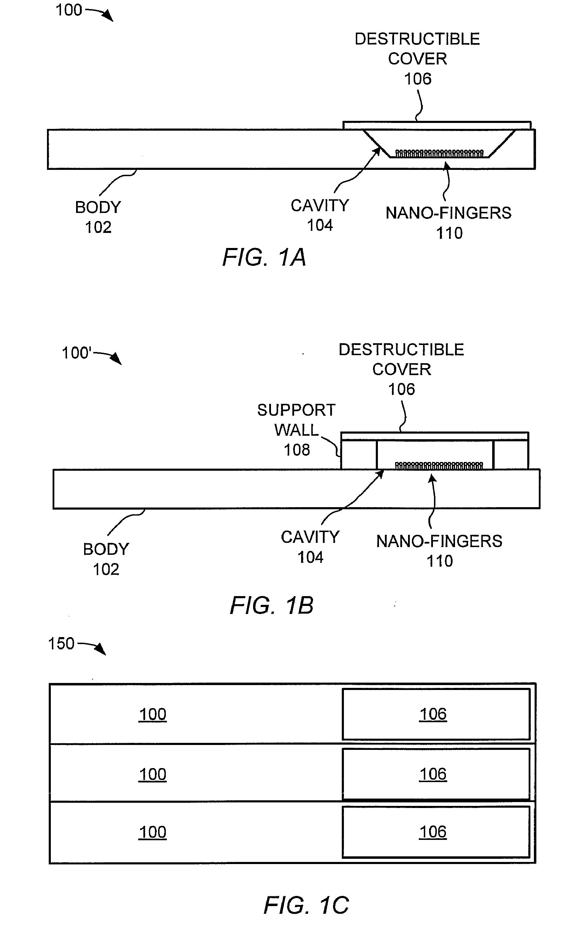

FIGS. 1A and 1B, respectively, show cross-sectional side views of apparatuses 100, 100' for use in a sensing application, according to two examples. Each of the apparatuses 100, 100' includes a body 102, a cavity 104, a destructible cover 106, and a plurality of nano-fingers 110. It should be understood that the apparatuses 100, 100' depicted in FIGS. 1A and 1B may include additional elements and that some of the elements described herein may be removed and/or modified without departing from scopes of the apparatuses 100, 100'. It should also be understood that the elements depicted in FIGS. 1A and 1B are not drawn to scale and thus, the elements may have different relative sizes with respect to each other than as shown therein.

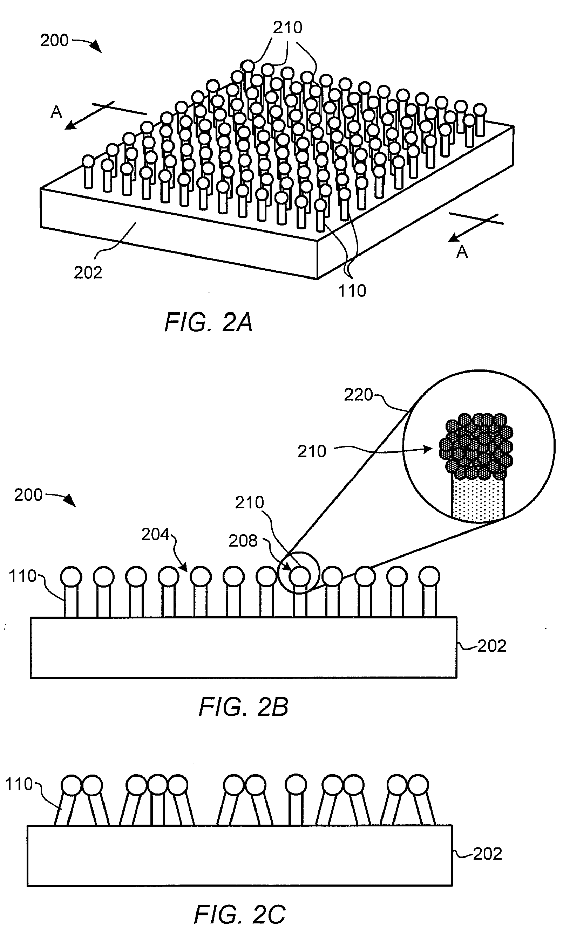

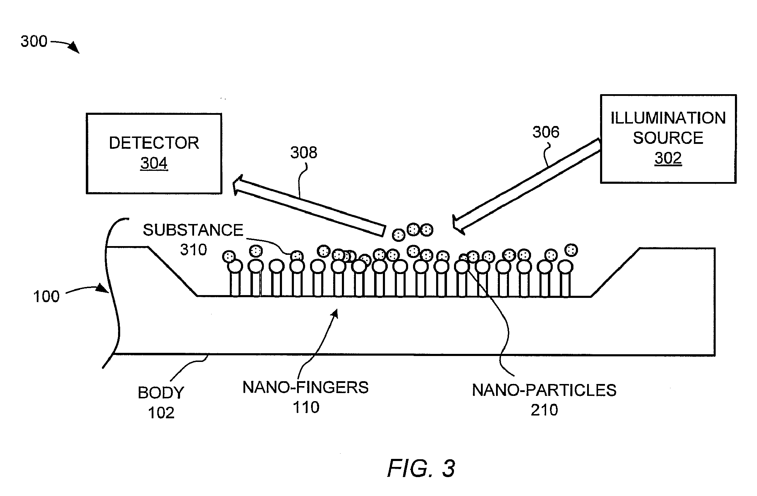

According to an example, the sensing application for which the apparatuses 100, 100' is to be used includes surface enhanced Raman spectroscopy (SERS), enhanced luminescence, enhanced fluorescence, etc. In this example, the apparatuses 100, 100' are to be used in the performance of the sensing application to detect a molecule in an analyte sample with a relatively high level of sensitivity. More particularly, the apparatuses 100, 100' each includes the plurality of nano-fingers 110, which include Raman-active material nano-particles (not labeled in FIGS. 1A and 1B), upon which SERS is to be performed. The nano-fingers 110 and the Raman-active material nano-particles are discussed in greater detail herein below with respect to FIGS. 2A-2C and a sensing apparatus for performing SERS is discussed in greater detail herein below with respect to FIG. 3.

As also shown in FIGS. 1A and 1B, the destructible cover 106 covers openings in the cavities 104. Although not explicitly shown in FIGS. 1A and 1B, the cavities 104 and the destructible cover 106 form an enclosure within which the nano-fingers 110 are housed. The nano-fingers 110 are thus substantially protected from an external environment. In other words, the nano-fingers 110, and more particularly, the Raman-active material nano-particles formed on the tips of the nano-fingers 110, are protected from various elements, including, moisture, air, contaminants, etc. In addition, the body 102 and the destructible cover 106 substantially protect the nano-fingers 110 from physical damage. Moreover, when it is time to apply a substance to be tested on the Raman-active material nano-particles, the destructible cover 106 is destroyed. Various manners in which the destructible cover 106 is to be destroyed are discussed in greater detail herein below.

In both apparatuses 100, 100', the body 102 has any suitable cross-sectional shape, such as, circular, rectangular, triangular, etc., and has thicknesses in the range of about 50 µm to about 10 mm, and widths and lengths in at least the millimeter range. In one example, the body 102 has sufficiently large dimensions, for instance, based upon the type of material from which the body 102 is formed, to be held between a user's fingers. In other words, the apparatuses 100, 100' are sized to function as test strips. Examples of suitable materials for the body 102 include, paper, silicon, silicon nitride, glass, plastic, polymer, SiO₂, Al₂O₃, aluminum, etc., or a combination of these materials, etc.

In FIG. 1A, the cavity 104 is depicted as being formed within the body 102. The cavity 104 may be formed in the body 102 through various fabrication techniques. For instance, the cavity 104 is molded into the body 102, cut out from the body 102, etc. As another example, the cavity 104 comprises a separate section that is attached to the body 102.

In FIG. 1B, the cavity 104 is depicted as being formed above a top surface of the body 102 by at least one support wall 108. The at least one support wall 108 is formed in any suitable cross-sectional configuration to form the cavity 104. According to an example, the at least one support wall 108 is formed of the same material as the body 102. Alternatively, however, the support wall 108 is formed of a different material from that of the body 102. In any regard, for instance, the at least one support wall 108 is formed of paper, silicon, silicon nitride, glass, plastic, polymer, SiO₂, Al₂O₃, aluminum, etc., or a combination of these materials, etc.

In addition, although the cavity 104 has been depicted as being positioned either within or above the body, it should also be clearly understood that in other examples, the cavity 104 is partially formed within the body 102 and/or positioned below the body 102.

In each of the examples above, openings in the cavities 104 are depicted as being covered by a respective destructible cover 106. The destructible cover 106 is to be stable under normal ambient conditions, for instance, temperature, light, etc. According to an example, the destructible cover 106 is to be destroyed through application of a mechanical force. Thus, for instance, the destructible cover 106 is formed of a relatively fragile material, such as, a thin sheet of glass or other relatively easily destroyed material. In this example, a mechanical force, such as, a bending, twisting, or other force, is to be applied onto the apparatus 100, 100' to destroy the destructible cover 106, thus exposing the nano-fingers 110.

According to another example, the destructible cover 106 is to dissolve within a predetermined length of time when the destructible cover 106 is subjected to various conditions. The various conditions include being immersed or otherwise coming into contact with certain fluids. In this regard, the destructible cover 106 is formed of a material that is designed and/or known to dissolve in the certain fluids within the predetermined length of time, such as, for instance, sugar, wax, etc. By way of example, a certain fluid comprises water and the destructible cover 106 comprises a water-soluble material, such as, water-soluble polymers, naturally occurring or synthesized polymers, polysaccharides, polyethylene oxide, etc. As another example, a certain fluid comprises gasoline and the destructible cover 106 comprises a material that is soluble in gasoline. Examples of materials for the destructible cover 106 include, for instance, oil soluble materials, such as, homopolymer or heteropolymer of polyacrylate, polystyrene, polyamide, etc. In addition, the predetermined length of time may be, for instance, around one minute, around 10 minutes, around one hour, around one day, etc. The predetermined length of time may be less than around 1 year, one month, one week, etc.

According to a particular example, the destructible cover 106 is formed of a material that is designed and/or known to dissolve in a fluid containing a substance to be tested on the Raman-active material nano-particles. By way of example, the substance to be tested comprises gasoline or gasoline-like fuel products and a sensing application is to be performed on the gasoline molecules around the nano-fingers 110 to test for a specific marker in the fuel product. For instance, the sensing application is to be performed to detect at least one of octane levels, impurities, contaminants, etc. In various respects, therefore, the destructible cover 106 is matched to the particular substance to be tested, such that, the Raman-active material nano-particles are maintained within a protective containment up until the time at which the substance to be tested is ready for application onto the Raman-active material nano-particles.

According to another particular example, the destructible cover 106 is also composed of at least material that does not significantly affect sensing applications performed on the Raman-active material nano-particles. In other words, the destructible cover 106, in this example, is composed of a material(s) that does not substantially affect the substance to be tested, for instance, when the destructible cover 106 is immersed in the substance to be tested. More particularly, for instance, the destructible cover 106 is composed of a material(s) that is inert with respect to the substance to be tested.

As shown in FIGS. 1A and 1B, the destructible cover 106 is spaced from the tops of the nano-fingers 110. In various examples, the gap formed between the nano-fingers 110 and the destructible cover 106 is filled with a filling material that does not substantially interact with the nano-fingers 110, and more particularly, with the Raman-active material nano-particles formed on the tips of the nano-fingers 110. In this regard, for instance, the gap in the cavity 104 is filled with a filling material that substantially prevents the Raman-active material nano-particles from undesired physical or chemical change. By way of example, the filling material comprises an inert gas, such as, N₂, Ar, dry air, etc.

In alternative examples, the body 102 includes multiple cavities 104 containing nano-fingers 110 and/or multiple openings in the cavity 104. In one example, a plurality of destructible covers 106 are positioned to cover the openings of the multiple cavities 104 and/or cavity 104. In other example, a single destructible cover 106 is positioned to cover the openings of the multiple cavities 104 and/or cavity 104.

Turning now to FIG. 1C, there is shown a top view of an array 150 of the apparatus 100 depicted in FIG. 1A, according to an example. In one example, each of the apparatuses 100 is removable from the array 150 for individual use. According to another example, two of the destructible covers 106 on different ones of the apparatuses 100 are formed of different materials. In this example, the array 150 may be inserted into different substances, such that, different ones of the destructible covers 106 dissolve in each of the different substances. A similar type of array may be formed with multiple ones of the apparatus 100' depicted in FIG. 1B.

Turning now to FIG. 2A, there is shown an isometric view of an array 200 of nano-fingers 110 for use in a sensing application, according to an example. As shown in FIG. 2A, the array 200 includes a substrate 202 upon which the nano-fingers 110 extend. More particularly, the nano-fingers 104 are depicted as being attached to and extending above a surface of the substrate 202. According to an example, the substrate 202 comprises part of the body 102. In this example, the substrate 202 comprises a bottom portion of the cavity 104 on the body 102. According to another example, the substrate 202 comprises a component separate from the body 102. In this example, the substrate 202 comprises a base upon with the nano-fingers 110 are formed and which is to be positioned and attached to the body 102 within the cavity 104. In addition, the substrate 202 may be formed of any of the materials discussed above with respect to the body 102.

According to an example, the nano-fingers 110 are formed of a relatively flexible material to enable the nano-fingers 110 to be laterally bendable, for instance, to enable tips of the nano-fingers 110 to move toward each other, as discussed in greater detail herein below. Examples of suitable materials for the nano-fingers 110 include polymer materials, such as, UV-curable or thermal curable imprinting resist, polyalkylacrylate, polysiloxane, polydimethylsiloxane (PDMS) elastomer, polyimide, polyethylene, polypropelene, fluoropolymer, etc., or any combination thereof, metallic materials, such as, gold, silver, aluminum, etc., semiconductor materials, etc., and combinations thereof.

The nano-fingers 110 are attached to the surface of the substrate 202 through any suitable attachment mechanism. For instance, the nano-fingers 110 are grown directly on the substrate 202 surface through use of various suitable nano-structure growing techniques. As another example, the nano-fingers 110 are integrally formed with the substrate 202. In this example, for instance, a portion of the material from which the substrate 202 is fabricated is etched or otherwise processed to form the nano-fingers 110. In a further example, a separate layer of material is adhered to the substrate 202 surface and the separate layer of material is etched or otherwise processed to form the nano-fingers 110. In various examples, the nano-fingers 110 are fabricated through a nanoimprinting or embossing process in which a template of relatively rigid pillars is employed in a multi-step imprinting process on a polymer matrix to form the nano-fingers 110. Various other processes, such as, etching, and various techniques used in the fabrication of micro-electromechanical systems (MEMS) and nano-electromechanical systems (NEMS) may also be used to fabricate the nano-fingers 110.

A nano-finger 110 is defined, for instance, as an elongated, nanoscale structure having a length (or height) that exceeds by more than several times a nanoscale cross sectional dimension (for instance, width) taken in a plane perpendicular to the length (for instance, length > 3 x width). In general, the length is much greater than the width or cross sectional dimension to facilitate bending of the nano-finger 110 laterally onto one or more neighboring nano-fingers 110. In some examples, the length exceeds the cross sectional dimension (or width) by more than a factor of about 5 or 10. For example, the width may be about 100 nanometers (nm) and the height may be about 500 nm. In another example, the width at the bases of the nano-fingers 110 may range between about 10 nm and about 1 micrometer (µm) and the length may range between about 50 nm and 2 µm. In other examples, the nano-fingers 110 are sized based upon the types of materials used to form the nano-fingers 110. Thus, for instance, the more rigid the material(s) used to form the nano-fingers 110, the less the width of the nano-fingers 110 may be to enable the nano-fingers 110 to be laterally collapsible. In further examples, the nano-fingers 110 may form ridges in which two of three dimensions (for instance, length and height) exceed by more than several times a nanoscale cross sectional dimension (for instance, width). The nano-fingers 110 may equivalently be referenced as nano-poles or nano-pillars without departing from a scope of the apparatuses 100, 100'.

The nano-fingers 110 have been depicted as having substantially cylindrical cross-sections. It should, however, be understood that the nano-fingers 110 may have other shaped cross-sections, such as, for instance, rectangular, square, triangular, etc. In addition, or alternatively, the nano-fingers 110 may be formed with one or more features, such as, notches, bulges, etc., to substantially cause the nano-fingers 110 to be inclined to collapse in particular directions. Thus, for instance, two or more adjacent nano-fingers 110 may include the one or more features to increase the likelihood that the nano-fingers 110 collapse toward each other. Various manners in which the nano-fingers 110 may be collapsed are described in greater detail herein below.

The array 200 includes a substantially random distribution of nano-fingers 110 or a predetermined configuration of nano-fingers 110. In any regard, according to an example, the nano-fingers 110 are arranged with respect to each other such that the tips of at least two neighboring nano-fingers 110 are able to touch each other when the nano-fingers 110 are in a bent condition. By way of particular example, the neighboring nano-fingers 110 are positioned less than about 100 nanometers apart from each other. In addition, although FIG. 2A depicts the array as having a relatively large number of nano-fingers 110 arranged along each row, it should be understood that the array may include any number of nano-fingers 110 in each row without departing from a scope of the apparatus 100, 100'. In one regard, the apparatus 100, 100' includes a relatively large number of nano-fingers 110 to generally enhance the likelihood of capturing molecules of a substance to be tested.

As also shown in FIG. 2A, nano-particles 210 are provided on the tips of the nano-fingers 110. The nano-particles 210 generally comprise Raman-active material nano-particles. The Raman-active material nano-particles 210 comprise a metal, such as, gold, silver, copper, platinum, aluminum, etc., or a combination of these metals in the form of alloys, or other suitable material that is able to support surface plasmons for field enhancement for Raman scattering. In addition, the Raman-active material nano-particles 210 may be multilayer structures, for example, 10 to 100 nm silver layer with 1 to 50 nm gold over-coating, or vice versa. By definition herein, a Raman-active material is a material that facilitates Raman scattering from a sample positioned near the Raman-active material during Raman spectroscopy.

Turning now to FIG. 2B, there is shown a cross-sectional view along a line A-A, shown in FIG. 2A, of the array 200, in accordance with an example. In addition, a free end 208 of a nano-finger 110 is magnified in an enlargement 220, which reveals that Raman-active material nano-particles 210 are disposed on the outer surface, near the tip or free end 208, of the nano-finger 110. The other nano-fingers 110 also include the Raman-active nano-particles 210 as represented by the circles on the tops or free ends 208 of the nano-fingers 110. Although the enlargement 220 depicts the Raman-active material nano-particles 210 as covering the entire tip 208 of the nano-finger 110, it should be understood that examples of the apparatus 100, 100' may be implemented with gaps between some of the nano-particles 210. It should also be noted that examples of the apparatus 100, 100' are not limited to nano-particles 210 disposed over just the tips of the nano-fingers 110. In other examples, the nano-particles 212 are disposed over part of or nearly the entire surface of the nano-fingers 110.

In any regard, the Raman-active nano-particles 210 may be deposited onto at least the free ends 208 of the nano-fingers 110 through, for instance, physical vapor deposition (PVD), chemical vapor deposition (CVD), sputtering, etc., of metallic material, or self-assembly of pre-synthesized nano-particles. By way of example, the angle at which the nano-particles 210 are deposited onto the free second ends 208 of the nano-fingers 110 are controlled to thereby substantially control the deposition of the nano-particles 210.

In addition, the Raman-active material nano-particles 210 may one or both of enhance Raman scattering and facilitate analyte adsorption. For instance, the Raman-active material nano-particles 210 comprise a Raman-active material such as, but not limited to, gold (Au), silver (Ag), and copper (Cu) having nanoscale surface roughness. Nanoscale surface roughness is generally characterized by nanoscale surface features on the surface of the layer(s) and may be produced spontaneously during deposition of the Raman-active material layer(s). By definition herein, a Raman-active material is a material that facilitates Raman scattering and the production or emission of the Raman signal from an analyte adsorbed on or in a surface layer or the material during Raman spectroscopy.

Although the nano-fingers 110 have been depicted in FIGS. 2A-2B as each extending vertically and at the same heights with respect to each other, it should be understood that some or all of the nano-fingers 110 may extend at various angles and heights with respect to each other. The differences in angles and/or heights between the nano-fingers 110 may be based upon, for instance, differences arising from manufacturing or growth variances existent in the fabrication of the nano-fingers 110 and the deposition of the nano-particles 210 on the nano-fingers 110, etc.

As shown in FIG. 2B, the nano-fingers 110 are in a first position, in which the free ends 208 are in a substantially spaced arrangement with respect to each other. The gaps 204 between the free ends 208 may be of sufficiently large size to enable analyte or other liquid to be positioned in the gaps 204. In addition, the gaps 204 may be of sufficiently small size to enable the free ends 208 of at least some of the nano-fingers 210 to move toward each other as the analyte or other liquid evaporates, through, for instance, capillary forces applied on the free ends 208 as the analyte or other liquid dries.

Turning now to FIG. 2C, there is shown a cross-sectional view along a line A-A, shown in FIG. 2A, of the array 200, in accordance with another example. The view depicted in FIG. 2C is identical to the view depicted in FIG. 2B, except that the nano-fingers 110 are depicted in a second position, in which the free ends 208 of some of the nano-fingers 110 are in substantial contact with each other. According to an example, the free ends 208 of some of the nano-fingers 110 may be in and may remain in substantial contact with each other for a period of time due to the capillary forces applied on the free ends 208 during and following evaporation of a liquid in the gaps 204 between the free ends 208. In other examples, the free ends 208 of some of the nano-fingers 110 may be maintained in the second positions through, for instance, removal of an electrostatic charge on the free ends 208. In those examples, the nano-fingers 110 may be fabricated to normally have the second position depicted in FIG. 2C and may have the first position depicted in FIG. 2B when the electrostatic charge is applied onto the free ends 208 of the nano-fingers 110.

In any event, and in one regard, the free ends 208 of the nano-fingers 110 are caused to contact each other as shown in FIG. 2C to cause an analyte molecule to be tested to substantially be trapped between contacting free ends 208. By substantially trapping an analyte molecule to be tested between the free ends 208, SERS on the analyte molecule may be enhanced because the relatively small gaps between the free ends 208 create "hot spots" having relatively large electric field strengths. Substantially trapping an analyte molecule here is intended to indicate that the analyte molecule may either be trapped between two free ends 208 or may be attached on one of the free ends 208 of adjacently located free ends 208.

With reference now to FIG. 3, there is shown a block diagram of a sensing apparatus 300 for use in a sensing application, according to an example. As shown in FIG. 3, the sensing apparatus 300 includes the apparatus 100 depicted in FIG. 1A, although the apparatus 100' depicted in FIG. 1B could equivalently be provided. In this regard, the sensing apparatus 300 is to be used following collection onto the nano-fingers 110 of a substance 310 to be tested. In other words, the apparatus 100 is to be inserted into the sensing apparatus 300 following removal of the destructible cover and introduction of the nano-fingers 110 into a substance to be tested.

The sensing apparatus 300 is also depicted as including an illumination source 302 and a detector 304. Molecules of a substance 310 to be tested are also depicted as being positioned in contact with and in close proximity to the Raman-active material nano-particles 210. According to an example, the relative position of the apparatus 100 and the illumination source 302 and the detector 304 is to be modified to thereby enable testing to be performed on various locations of the Raman-active material nano-fingers 110. In this example, the apparatus 100 is movable with respect to the sensing apparatus 300, the sensing apparatus 300 is movable with respect to the apparatus 100, or both.

The illumination source 302 is depicted as emitting electromagnetic radiation, as represented by the arrow 306, which comprises, for instance, light. By way of example, the illumination source 302 comprises a laser that illuminates the substance 310 and the Raman-active material nano-particles 210. Illumination of the Raman-active material nano-particles 210 causes hot spots of relatively large electric field strength to occur. The hot spots are increased at the locations where the Raman-active material nano-particles 210 contact each other (not shown). The electric fields generated at the contact locations between the Raman-active material nano-particles 210 generally enhance the rate at which Raman light is scattered by the substance 310 positioned at or near the contact locations. The Raman scattered light, which is represented by the arrow 308, is shifted in frequency by an amount that is characteristic of particular vibrational modes of the substance 310. The detector 304 is to collect the Raman scattered light 308 and spectral analysis is to be performed on the Raman scattered light 308.

The Raman-active material nano-particles 210 located near or adjacent to the substance 310 is to enhance the production of Raman scattered light 308 from the substance 310 by concentrating or otherwise enhancing an electromagnetic field in or around the substance 310. In this regard, the likelihood that the substance 310 will produce sufficiently strong Raman scattered light 308 to be detected by the detector 304 and processed will thus also be increased.

Although the Raman scattered light 308 has been depicted as being directed toward the detector 304, the Raman scattered light 308 is emitted in multiple directions. In this regard, some of the Raman scattered light 308 may be directed into the body 102, which, in one example, comprises an optical waveguide. More particularly, for instance, Raman scattered light 308 may be generated in the body 102 as a result of the substance 310 coupling to the evanescent field of a waveguide mode. In these instances, the detector 304 may be positioned to detect the waves generated in the body 102 from the Raman scattered light 308. In any regard, the 308 may include a filter to filter out light originating from the illumination source 302, for instance, through use of a grating-based monochrometer or interference filters. The detector 304 may alternatively be positioned at other locations with respect to the nano-fingers 110, for instance, below the body 102 in FIG. 3.

In any regard, the detector 304 is generally to convert the Raman scattered light 308 emitted from the substance 310 into electrical signals. In some examples, the detector 304 is to output the electrical signals to other components (not shown) that are to process the electrical signals, such as, a computing device. In other examples, the detector 304 is equipped with the processing capabilities.

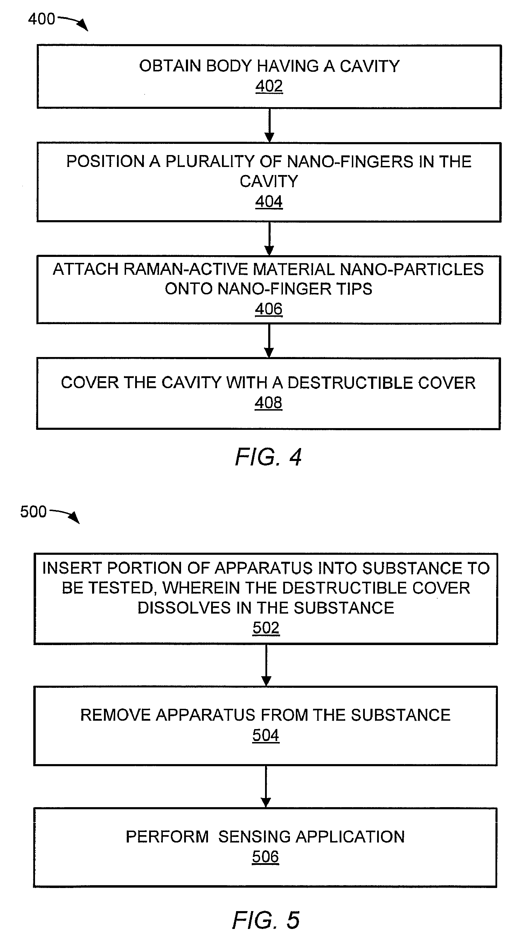

Turning now to FIG. 4, there is shown a flow diagram of a method 400 for fabricating an apparatus 100, 100' for use in a sensing application, according to an example. It should be understood that the method 400 may include additional processes and that some of the processes described herein may be removed and/or modified without departing from a scope of the method 400.

At block 402, a body 102 having a cavity 104 is obtained. As discussed above, the body 102 comprises dimensions that enable the body 102 to be used as a test strip. In addition, the body 102 is composed of various types of materials and is either formed with the cavity 104 or the cavity 104 is formed into the body 102. Moreover, the body 102 may be formed as part of an array of bodies 102 as shown in FIG. 1C, such that, multiple ones of the apparatus 100, 100' may be fabricated concurrently.

At block 404, a plurality of nano-fingers 110 is positioned in the cavity 104. According to an example, the nano-fingers 110 are formed directly onto a surface of the body 102 portion of the cavity 104. In another example, the nano-fingers 110 are formed on a substrate 202 and the substrate 202 is positioned within and attached to the surface of body 102 portion of the cavity 104.

According to an example, a nanoimprinting technique or a roll-to-roll process is implemented to form the nano-fingers 110 on the surface of the body 102 or the substrate 202. In this example, a template may be formed through photolithography or other advanced lithography with the desired patterning to arrange the nano-fingers 110 in the predetermined arrangement. More particularly, for instance, the desired patterns may be designed on a mold, by E-beam lithography, photolithography, laser interference lithography, Focused Ion Beam (FIB), self-assembly of spheres, etc. In addition, the pattern may be transferred onto, for instance, silicon, glass, or polymer substrate (PDMS, polyimide, polycarbonate, etc.). In other examples, the nano-fingers 110 may be formed in the predetermined arrangement through implementation of any suitable fabrication process. In addition, the nano-fingers 110 may be provided on the surface of the body 102 or substrate 202 through any suitable attachment mechanism as discussed above.

At block 406, Raman-active material nano-particles 210 are attached to the tips of the nano-fingers 110. More particularly, Raman-active material nano-particles 210 are attached to the tips 208 of the nano-fingers 110 as discussed above with respect to FIG. 2B. The atoms or atom clusters of the Raman-active material nano-particles 210 may be deposited onto the tips of the nano-fingers 110 through, for instance, physical vapor deposition (PVD), chemical vapor deposition (CVD), sputtering, etc., of metallic material, or self-assembly of pre-synthesized nano-particles.

At block 406, an opening in the cavity 104 is covered with a destructible cover 106 to protect the nano-fingers 110. The destructible cover 106 is attached, for instance, through use of at least one of an adhesive, heat, mechanical fasteners, etc., onto either a surface of the body 102 (FIG. 1A) or the support wall 108 (FIG. 1B). According to an example, the destructible cover 106 is hermetically sealed to the body 102 or the support wall 108. In addition or alternatively, the gap formed between the nano-fingers 110 and the destructible cover 106 is filled with a filling material that does not substantially interact with the nano-fingers 110, and more particularly, with the nano-particles 210 formed on the tips of the nano-fingers 110. As such, the filling material is selected such that filling material does not significantly decrease performance of the Raman-active material nano-particles 210.

According to the invention, the nano-fingers 110 are collapsed toward each other such that tips 208 of the nano-fingers 110 are substantially in contact with each other prior to covering of the cavity 104 with the destructible cover 106 at block 408. According to an example, the nano-fingers 110 are initially in a first position, in which their tips 208 are in a substantially spaced arrangement with respect to each other. In addition, the gaps between the tips of the nano-fingers 110 are of sufficiently large size to enable a liquid to be supplied in the gaps. Moreover, the gaps are of sufficiently small size to enable the tips 208 of the nano-fingers 110 to move toward each other as the liquid evaporates, through, for instance, capillary forces applied on the tips as the liquid dries. Other non-limiting examples, such as e-beam, ion-beam, magnetic, mechanical force, thermal effect, or electric charge effect, may also or instead be utilized to cause the tips 208 of the nano-fingers 110 to move toward each other. In any regard, the Raman-active material nano-particles 210 may contact each other and remain in contact with each other through, for instance, van der Waals interactions between those contacting nano-particles 210.

In other examples which are not embodiments of the present invention, the tips 208 of the nano-fingers 110 are kept in a substantially separated arrangement prior to covering of the cavity 104 with the destructible cover 106. In these examples, the tips 208 of the nano-fingers 110 may be brought into substantial contact with each other following removal of the destructible cover 106. For instance, the substance to be tested may be introduced between the nano-fingers 110 and dried, which may cause the tips of the nano-fingers 110 to move toward each other and trap molecules of the substance to be tested.

Turning now to FIG. 5, there is shown a flow diagram of a method 500 for performing a sensing application using the apparatus 100, 100' depicted in FIGS. 1A-1B, according to an example. It should be understood that the method 500 may include additional processes and that some of the processes described herein may be removed and/or modified without departing from a scope of the method 500.

At block 502, at least a portion of the apparatus 100, 100' is inserted into a substance to be tested. The portion of the apparatus 100, 100' that is inserted into the substance to be tested comprises the portion of the apparatus 100, 100' that includes the destructible substrate 106 and the nano-fingers 110, although the entire apparatus 100, 100' may be inserted. As discussed above, in some examples, the destructible material 106 comprises a material that dissolves in the substance to be tested within a predetermined length of time. The predetermined length of time may comprise, for instance, less than about one minute, less than about one hour, etc. As such, insertion of the section of the apparatus 100, 100' containing the destructible cover 106 causes the destructible cover 106 to dissolve, thereby exposing the substance to be tested to the Raman-active material nano-particles 210 contained in the cavity 104. Moreover, direct insertion of the destructible cover 106 into the substance to be tested prior to removal of the destructible cover 106 prevents introduction of contaminants onto the Raman-active material nano-particles 210, thus resulting in relatively more accurate sensing application results.

At block 504, the apparatus 100, 100' is removed from the substance to be tested. During removal of the apparatus 100, 100', some portion of the substance to be tested remains on the Raman-active material nano-particles 210.

At block 506, a sensing application is performed on the substance that remains on the Raman-active material nano-particles 210. The sensing apparatus 300 may perform the sensing application as discussed above with respect to FIG. 3.

According to an example which not an embodiment of the present invention, the tips 208 of the nano-fingers 110 are brought into substantial contact with each other following removal of the apparatus 100, 100' from the substance to be tested For instance, the substance to be tested may be introduced between the nano-fingers 110 and dried, causing the tips of the nano-fingers 110 to move toward each other and trap molecules of the substance to be tested.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example along with some of its variations. The terms, descriptions and figures used herein are set forth by way of illustration only and are not meant as limitations. Many variations are possible within the scope of the subject matter, which is intended to be defined by the following claims -- and their equivalents -- in which all terms are meant in their broadest reasonable sense.

## Claims

1. An apparatus (100) for use in a sensing application, said apparatus comprising:
a body (102) having a cavity (104) containing an opening;
a plurality of nano-fingers (110) positioned in the cavity;
and further comprising,
a destructible cover (106) covering the opening in the cavity to protect the plurality of nano-fingers, wherein the destructible cover is arranged to be destroyed to allow a substance to be tested to be applied to the plurality of nano-fingerswherein each of the
plurality of nano-fingers is composed of a flexible material, and
wherein the plurality of nano-fingers are collapsed toward each other such that tips of the plurality of nano-fingers are substantially in contact with each other.

2. The apparatus according to claim 1 , wherein the plurality of nano-fingers comprises respective bases and tips (208), said apparatus further comprising:
Raman-active material nano-particles (210) attached to respective tips of the plurality of nano-fingers.

3. The apparatus according to claim 1, wherein the plurality of nano-fingers is formed on a substrate that is positioned within the cavity.

4. The apparatus according to claim 1, wherein the destructible cover is attached to an area around an opening of the cavity in a manner to hermetically seal the cavity.

5. The apparatus according to claim 1 , wherein a gap is provided between the plurality of nano-fingers and the destructible cover, wherein the gap is filled with a filling material that does not substantially interact with the plurality of nano-fingers.

6. The apparatus according to claim 1 , wherein the destructible cover comprises a material that decomposes in a predetermined substance to be tested within a predetermined length of time.

7. The apparatus according to claim 6, wherein the predetermined substance to be tested comprises a fuel product.

8. The apparatus according to claim 6, wherein a gap is provided between the plurality of nano-fingers and the destructible cover, wherein the gap is filled with a filling material that does not substantially interact with the plurality of nano-fingers.

9. A method of fabricating the apparatus according to claim 1, said method comprising:
obtaining the body having the cavity;
forming the plurality of nano-fingers, each composed of a flexible material and which are collapsed towards each other such that the tips of the plurality of nano-fingers are substantially in contact with each other, on a substrate that is positioned within the cavity;
covering the opening in the cavity with the destructible cover.

10. The method according to claim 9, further comprising:
attaching Raman-active material nano-particles onto the tips of the plurality of nano-fingers prior to covering the opening in the cavity with the destructible cover.

11. The method according to claim 9, wherein covering the opening in the cavity with the destructible cover further comprises hermetically sealing the cavity with the destructible cover.

12. The method according to claim 9, wherein covering the cavity with the destructible cover further comprises covering the cavity such that a gap is provided between the plurality of nano-fingers and the destructible cover, said method further comprising:
filling the gap with a filling material that does not substantially interact with the plurality of nano-fingers.

13. A method for performing a sensing application using the apparatus of claim 2, wherein the destructible cover comprises a material that dissolves in the substance to be tested within a predetermined length of time, said method comprising:
inserting at least a portion of the apparatus into a substance to be tested, wherein the substance to be tested causes the destructible cover to dissolve, thereby exposing the substance to be tested to the plurality of Raman-active material nano-particles;
removing the sensing apparatus from the substance; and
performing a sensing application on portions of the substance remaining on or near the Raman-active material nano-particles.

14. The method according to claim 13, wherein the substance to be tested comprises a fluid.

## Patentansprüche

1. Vorrichtung (100) für Gebrauch in einer Sensoranwendung, wobei die Vorrichtung Folgendes umfasst:
einen Körper (102) mit einem Hohlraum (104), eine Öffnung enthaltend;
mehrere in dem Hohlraum angeordnete Nanofinger (110);
und ferner Folgendes umfassend:
eine zerstörbare Abdeckung (106), die die Öffnung im Hohlraum abdeckt, um die mehreren Nanofinger zu schützen, wobei die zerstörbare Abdeckung angeordnet ist,
zerstört zu werden, um zu ermöglichen, dass eine zu testende Substanz auf die mehreren Nanofinger aufgebracht wird, wobei jeder der mehreren Nanofinger aus
einem flexiblen Material zusammengesetzt ist, und
wobei die mehreren Nanofinger derart zueinander hin zusammengeklappt sind, dass Spitzen der mehreren Nanofinger einander im Wesentlichen berühren.

2. Vorrichtung nach Anspruch 1, wobei die mehreren Nanofinger entsprechende Füße und Spitzen (208) umfassen, wobei die Vorrichtung ferner Folgendes umfasst:
Nanopartikel aus Raman-aktivem Material (210), angebracht an den entsprechenden Spitzen der mehreren Nanofinger.

3. Vorrichtung nach Anspruch 1, wobei die mehreren Nanofinger auf einem Substrat ausgebildet sind, das innerhalb des Hohlraums angeordnet ist.

4. Vorrichtung nach Anspruch 1, wobei die zerstörbare Abdeckung auf eine Weise an einem Bereich um eine Öffnung des Hohlraums angebracht ist, um den Hohlraum hermetisch abzudichten.

5. Vorrichtung nach Anspruch 1, wobei ein Spalt zwischen den mehreren Nanofingern und der zerstörbaren Abdeckung bereitgestellt ist, wobei der Spalt mit einem Füllmaterial gefüllt ist, das nicht wesentlich mit den mehreren Nanofingern interagiert.

6. Vorrichtung nach Anspruch 1, wobei die zerstörbare Abdeckung ein Material umfasst, das sich innerhalb eines vorgegebenen Zeitraums in einer vorgegebenen zu testenden Substanz zersetzt.

7. Vorrichtung nach Anspruch 6, wobei die vorgegebene zu testende Substanz ein Brennstoffprodukt umfasst.

8. Vorrichtung nach Anspruch 6, wobei ein Spalt zwischen den mehreren Nanofingern und der zerstörbaren Abdeckung bereitgestellt ist, wobei der Spalt mit einem Füllmaterial gefüllt ist, das nicht wesentlich mit den mehreren Nanofingern interagiert.

9. Verfahren zum Herstellen der Vorrichtung nach Anspruch 1, wobei das Verfahren Folgendes umfasst:
Erhalten des Körpers, der den Hohlraum aufweist;
Ausbilden der mehreren Nanofinger, wobei jeder aus einem flexiblen Material ausgebildet ist und diese derart zueinander hin zusammengeklappt sind, dass die Spitzen der mehreren Nanofinger einander im Wesentlichen berühren, auf einem Substrat, das innerhalb des Hohlraums angeordnet ist;
Abdecken der Öffnung im Hohlraum mit der zerstörbaren Abdeckung.

10. Verfahren nach Anspruch 9, ferner Folgendes umfassend:
Aufbringen von Nanopartikeln aus Raman-aktivem Material auf die Spitzen der mehreren Nanofinger vor dem Abdecken der Öffnung im Hohlraum mit der zerstörbaren Abdeckung.

11. Verfahren nach Anspruch 9, wobei das Abdecken der Öffnung im Hohlraum mit der zerstörbaren Abdeckung ferner hermetisches Abdichten des Hohlraums mit der zerstörbaren Abdeckung umfasst.

12. Verfahren nach Anspruch 9, wobei Abdecken des Hohlraums mit der zerstörbaren Abdeckung ferner das Abdecken des Hohlraums derart umfasst, dass ein Spalt zwischen den mehreren Nanofingern und der zerstörbaren Abdeckung bereitgestellt ist, wobei das Verfahren ferner Folgendes umfasst:
Füllen des Spalts mit einem Füllmaterial, das nicht wesentlich mit den mehreren Nanofingern interagiert.

13. Verfahren zum Ausführen einer Sensoranwendung unter Einsatz der Vorrichtung nach Anspruch 2, wobei die zerstörbare Abdeckung ein Material umfasst, das sich innerhalb eines vorgegebenen Zeitraums in der zu testenden Substanz auflöst, wobei das Verfahren Folgendes umfasst:
Einführen wenigstens eines Abschnitts der Vorrichtung in eine zu testende Substanz, wobei die zu testende Substanz bewirkt, dass sich die zerstörbare Abdeckung auflöst, wodurch die zu testende Substanz den mehreren Nanopartikeln aus Raman-aktivem Material ausgesetzt wird;
Entfernen der Sensorvorrichtung aus der Substanz; und
Ausführen einer Sensoranwendung an Teilen der Substanz, die an oder nahe den Nanopartikeln aus Raman-aktivem Material verbleibt.

14. Verfahren nach Anspruch 13, wobei die zu testende Substanz ein Fluid umfasst.

## Revendications

1. Appareil (100) pour utilisation dans une application comme détecteur, ledit appareil comprenant :
un corps (102) comportant une cavité (104) contenant une ouverture ;
plusieurs nanodoigts (110) positionnés dans la cavité ;
et comprenant en outre :
un couvercle destructible (106) couvrant l'ouverture dans la cavité pour protéger les plusieurs nanodoigts, le couvercle destructible étant arrangé pour être détruit afin de permettre à une substance à tester d'être appliquée aux plusieurs nanodoigts, chacun des plusieurs nanodoigts étant constitué d'un matériau flexible, et
dans lequel les plusieurs nanodoigts sont rabattus les uns sur les autres de façon que les pointes des plusieurs nanodoigts soient fondamentalement en contact les unes avec les autres.

2. Appareil selon la revendication 1, dans lequel les plusieurs nanodoigts comprennent des bases et des pointes respectives (208), ledit appareil comprenant en outre :
des nanoparticules de matériaux actif en spectrographie Raman (210) attachées aux pointes respectives des plusieurs nanodoigts.

3. Appareil selon la revendication 1, dans lequel les plusieurs nanodoigts sont formés sur un substrat positionné à l'intérieur de la cavité.

4. Appareil selon la revendication 1, dans lequel le couvercle destructible est attaché à une surface autour d'une ouverture de la cavité de manière à sceller hermétiquement la cavité.

5. Appareil selon la revendication 1, dans lequel il y a un espace entre les plusieurs nanodoigts et le couvercle destructible, l'espace étant rempli d'un matériau de remplissage qui n'interagit pas substantiellement avec les plusieurs nanodoigts.

6. Appareil selon la revendication 1, dans lequel le couvercle destructible comprend un matériau qui se décompose en une substance prédéterminée à tester dans une durée prédéterminée.

7. Appareil selon la revendication 6, dans lequel la substance prédéterminée à tester comprend un carburant.

8. Appareil selon la revendication 6, dans lequel il y a un espace entre les plusieurs nanodoigts et le couvercle destructible, l'espace étant rempli d'un matériau de remplissage qui n'interagit pas substantiellement avec les plusieurs nanodoigts.

9. Procédé de fabrication de l'appareil selon la revendication 1, ledit procédé comprenant :
l'obtention du corps comportant la cavité ;
la formation de plusieurs nanodoigts, chacun composé d'un matériau flexible, et qui sont rabattus les uns sur les autres de façon que les pointes des plusieurs nanodoigts soient fondamentalement en contact les unes avec les autres, sur un substrat positionné à l'intérieur de la cavité ;
la couverture de l'ouverture dans la cavité avec le couvercle destructible.

10. Procédé selon la revendication 9, comprenant en outre :
l'attache des nanoparticules de matériaux actif en spectrographie Raman sur les pointes des plusieurs nanodoigts pour couvrir l'ouverture dans la cavité avec le couvercle destructible.

11. Procédé selon la revendication 9, dans lequel couvrir l'ouverture dans la cavité avec le couvercle destructible comprend, en outre, de sceller hermétiquement la cavité avec le couvercle destructible.

12. Procédé selon la revendication 9, dans lequel couvrir la cavité avec le couvercle destructible comprend, en outre, de couvrir la cavité de façon à ce qu'il y ait un espace entre les plusieurs nanodoigts et le couvercle destructible, ledit procédé comprenant en outre :
le remplissage de l'espace par un matériau de remplissage qui n'interagit pas substantiellement avec les plusieurs nanodoigts.

13. Procédé pour effectuer une application de détecteur en utilisant l'appareil selon la revendication 2, dans lequel le couvercle destructible comprend un matériau qui se dissout dans la substance à tester dans une durée prédéterminée, ledit procédé comprenant :
l'insertion d'au moins une partie de l'appareil dans une substance à tester, la substance à tester provoquant la dissolution du couvercle destructible, ce qui expose la substance à tester à la pluralité de nanoparticules de matériaux actif en spectrographie Raman ;
l'enlèvement de l'appareil de détection de la substance ; et
la réalisation d'une application de détection sur des parties de la substance restant sur ou à proximité des nanoparticules de matériaux actif en spectrographie Raman.

14. Procédé selon la revendication 13, dans lequel la substance à tester comprend un fluide.
